# DEMANDE DE BREVET EUROPEEN

(11) **EP 3 885 844 A1**
(43) Date de publication de la demande: **29.09.2021**
(21) Numéro de dépôt: 20166291.3
(22) Date de dépôt: 27.03.2020
(51) Int. Cl.: G04D 1/00, G04D 7/12, G04D 1/02, G04D 7/00, B25J 9/00, B25J 9/16, B25J 11/00

(54) **PINCE POUR MACHINE REGLANTE D'HORLOGERIE**

(71) Demandeur: Nivarox-FAR S.A., 2400 Le Locle (CH)
(72) Inventeur: CRETENET, M. Davy, 25650 La Chaux-de-Gilley (FR); BARTHOULOT, Philippe, 25120 Maiche (FR); BALOSSI, Joseph, 25130 Villers-le-Lac (FR)
(74) Mandataire: ICB SA

(57) **Abrégé**

Pince (600) pour machine réglante (1000) d'horlogerie pour effectuer au moins un réglage et/ou ajustement sur un ensemble horloger (1) sous l'action d'un mécanisme de réglage et/ou ajustement, que comporte une telle machine réglante (1000), la pince (600) comporte des bras de pince (601) agencés pour entraîner ou déformer un mobile ou un composant que comporte un tel ensemble (1), et cette pince (600) est élastique et comporte au moins une portion d'appui (602) agencée pour être soumise à l'action d'un actionneur ou d'un galet (407) ou d'un excentrique et/ou d'un poussoir, que comporte un tel mécanisme de réglage et/ou ajustement, et dont toute déformation de la portion d'appui (602) modifie la position relative des bras (601) entre eux.

## Description

### Domaine de l'invention

L'invention concerne une pince pour machine réglante d'horlogerie pour effectuer au moins un réglage et/ou ajustement sur un ensemble horloger sous l'action d'un mécanisme de réglage et/ou ajustement, que comporte une dite machine réglante.

L'invention concerne encore un mécanisme de réglage et/ou ajustement d'horlogerie, comportant au moins une telle pince.

L'invention concerne le domaine des mécanismes de réglage de pièces d'horlogerie.

### Arrière-plan de l'invention

En horlogerie, certains réglages fins, notamment le réglage de fréquence d'un oscillateur, ou le réglage de marche d'une montre, sont des opérations peu automatisées, confiées à du personnel hautement qualifié, et qui nécessitent souvent plusieurs réglages élémentaires successifs.

L'obtention d'une haute qualité chronométrique est, ainsi, une opération coûteuse.

### Résumé de l'invention

L'invention se propose de réaliser l'automatisation de réglages fins sur des mouvements d'horlogerie, ou sur des têtes de montre, dites couramment « watch head » ou « WH », qui sont des ensembles terminés, et de réaliser cette automatisation au niveau d'un poste de travail compact, qui puisse par exemple être installé sur un établi d'horloger.

Les moyens mis en œuvre sont prévus pour assurer la propreté de ce poste de travail, ce qui est important en raison de la manipulation de têtes de montre terminées ou des mouvements terminés.

Cette installation doit garantir les performances attendues en matière de sensibilité, précision, digitalisation, flexibilisation et reproductibilité des réglages. Sa numérisation doit permettre de garantir des temps de cycle courts, et l'atteinte de hautes précisions, avec un poste de travail ergonomique et simple d'utilisation.

Si de nombreuses applications de l'invention sont possibles dans le domaine de l'horlogerie, l'invention est particulièrement bien adaptée au réglage fin d'un oscillateur, notamment par action sur des vis réglantes, directement dans le mouvement ou la tête de montre.

Le but est un réglage fiable lors d'une opération unique.

A cet effet, l'invention concerne une pince selon la revendication 1.

L'invention concerne encore un mécanisme de réglage et/ou ajustement d'horlogerie, comportant au moins une telle pince, selon la revendication 8.

### Description sommaire des dessins

D'autres caractéristiques et avantages de l'invention apparaîtront à la lecture de la description détaillée qui va suivre, en référence aux dessins annexés, où :

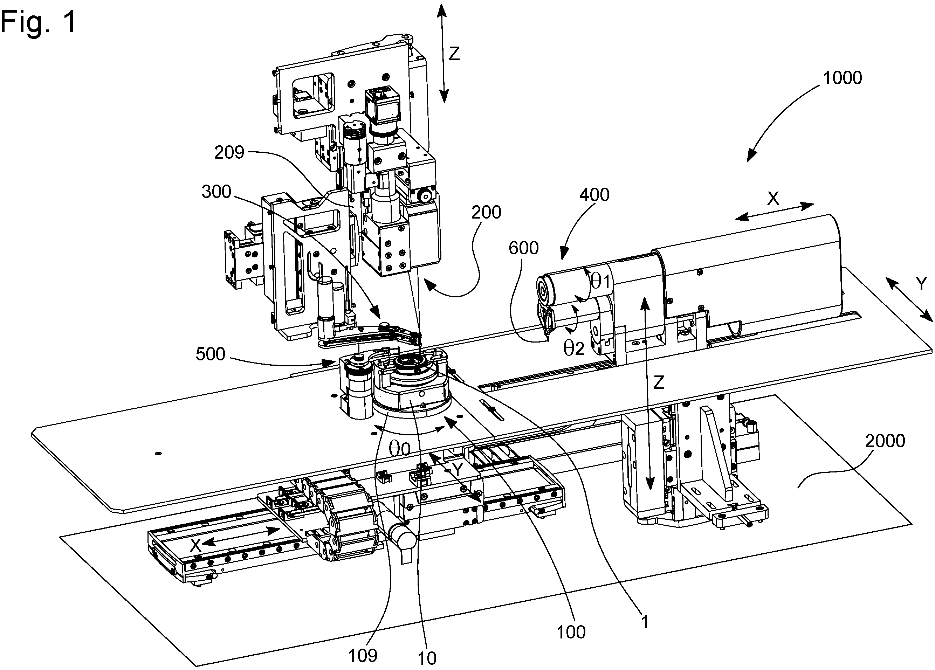

- la figure 1 représente, de façon schématisée, et en perspective, sans son carter, une machine réglante, qui comporte, sur un bâti, différents modules qui sont représentés indépendamment les uns des autres dans les figures suivantes, et dont un module de positionnement est fixé directement sur le bâti et comporte un chariot à mouvements croisés portant une table qui porte elle-même un réceptacle d'un ensemble horloger, et dont un module d'acquisition est mobile par rapport à un montant vertical non représenté, sous la forme d'une colonne en porte-à-faux, et comporte des moyens de vison et des moyens laser pour la détermination de position du réceptacle et de son contenu; le bâti porte directement un module de réglage et/ou ajustement, qui comporte une pince selon l'invention, agencée pour manœuvrer un mobile ou un composant d'un ensemble disposé sur le réceptacle ; un module d'entraînement comporte un entraîneur agencé pour entraîner ce mobile ou composant ; un module de maintien et/ou d'appui comporte un doigt d'appui agencé pour appuyer sur ce mobile ou composant ;
- la figure 2 représente, de façon similaire à la figure 1, un module de réglage et/ou ajustement, agencé pour effectuer un réglage et/ou un ajustement sur un mobile ou un composant d'un ensemble porté par un réceptacle disposé sur la table du module de positionnement, ce module de réglage et/ou ajustement comporte une pince ici monolithique, dont l'ouverture et la fermeture sont motorisées, et qui est manœuvrable en rotation et/ou en translation ;
- la figure 3 représente, de façon schématisée, et en plan, la pince selon l'invention, de la figure 2 ;
- la figure 4 représente, de façon similaire à la figure 2, un module d'entraînement agencé pour entraîner, au moins en rotation par le moyen d'un entraîneur rotatif, un tel composant ou mobile ;
- la figure 5 représente, de façon similaire à la figure 2, un module de maintien et/ou d'appui, comportant un doigt d'appui agencé pour exercer un appui sensiblement axial sur ce mobile ou composant ;

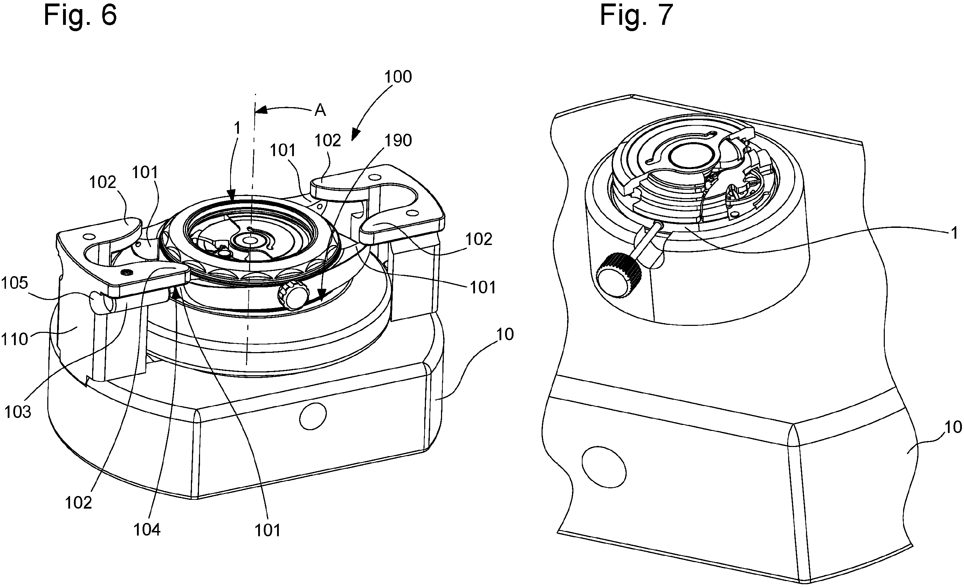

- la figure 6 représente, de façon schématisée, et en perspective, un réceptacle qui est un posage, portant ici une tête de montre disposée en position pour son réglage sur la machine réglante ;
- la figure 7 représente, de façon schématisée, partielle et en perspective, un autre réceptacle qui est un posage, portant ici un mouvement d'horlogerie disposé en position pour son réglage sur la machine réglante ;
- les figures 8 à 10 illustrent successivement, de façon schématisée, et en perspective :
- en figure 8, la préparation du posage de la figure 6 pour la réception d'une tête de montre, avec deux brides ou cales de blocage qui sont des fourches agencées pour prendre appui sur des cornes de la tête de montre ;
- - en figure 9, la dépose de la tête de montre sur un mécanisme à ressort et en appui sur une surface d'appui dans une position angulaire où les cornes sont en dehors des bras des fourches 102 ;
- en figure 10, la fixation de la tête de montre sur son réceptacle, après une la rotation de la tête de montre jusqu'à une position d'appui de butée angulaire d'une des cornes sur une goupille ;

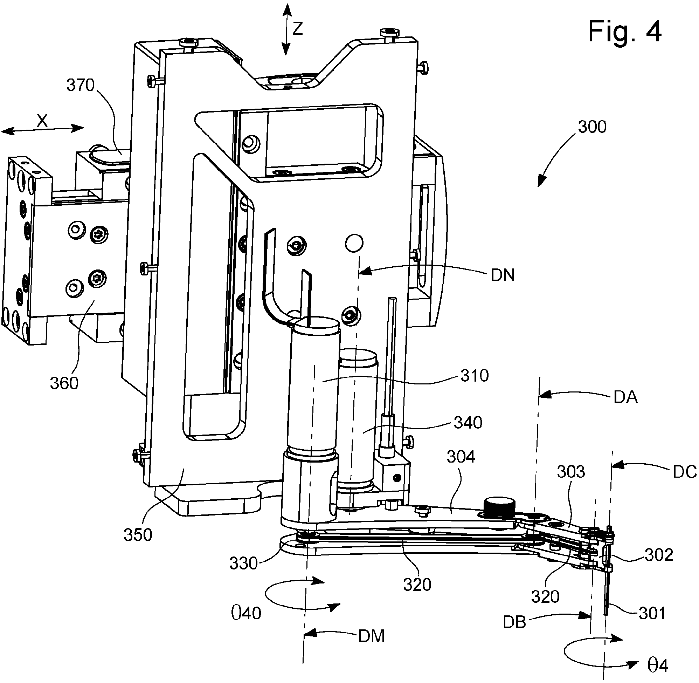

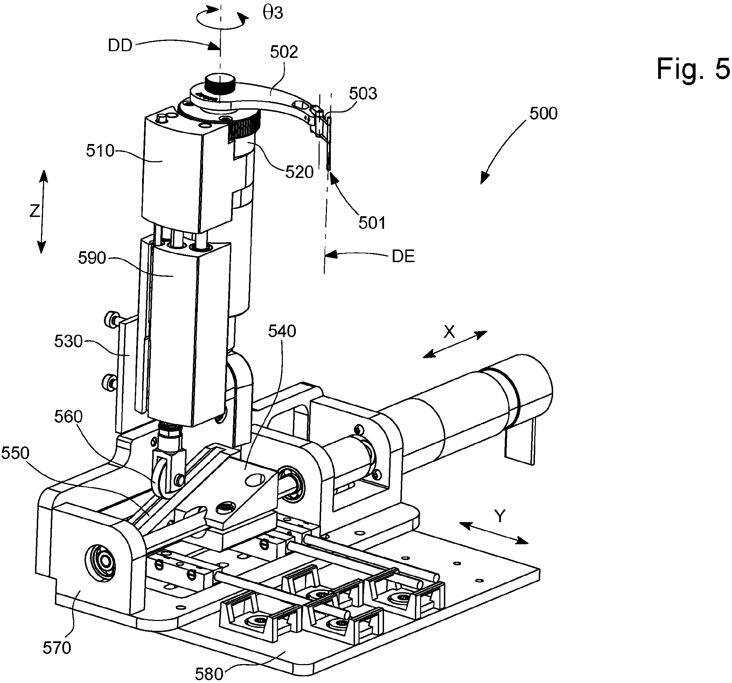

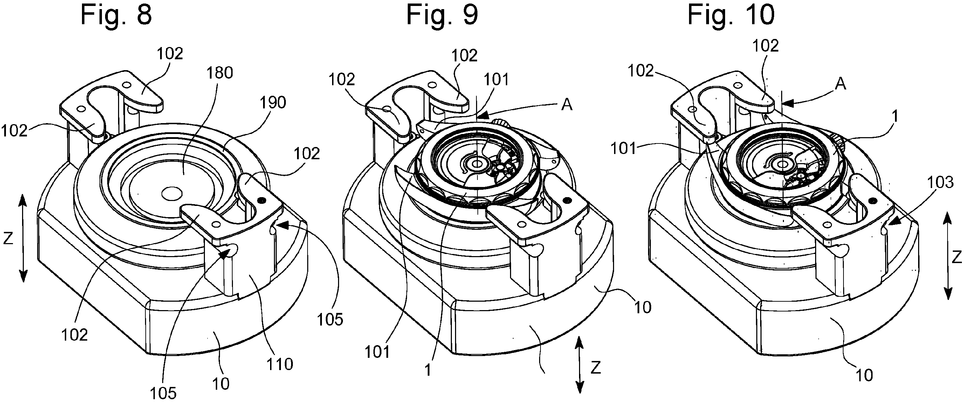

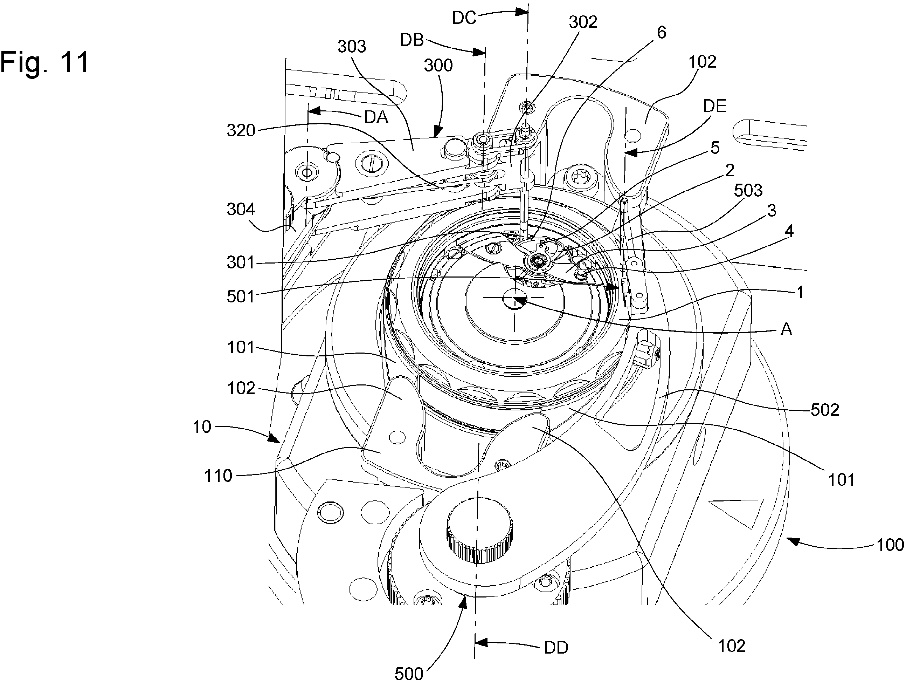

- la figure 11 représente, de façon schématisée, et en perspective, la coopération du module d'entraînement de la figure 4, et du module de maintien et/ou d'appui de la figure 5, avec un balancier que comporte la tête de montre monté sur le réceptacle selon la figure 10 ;

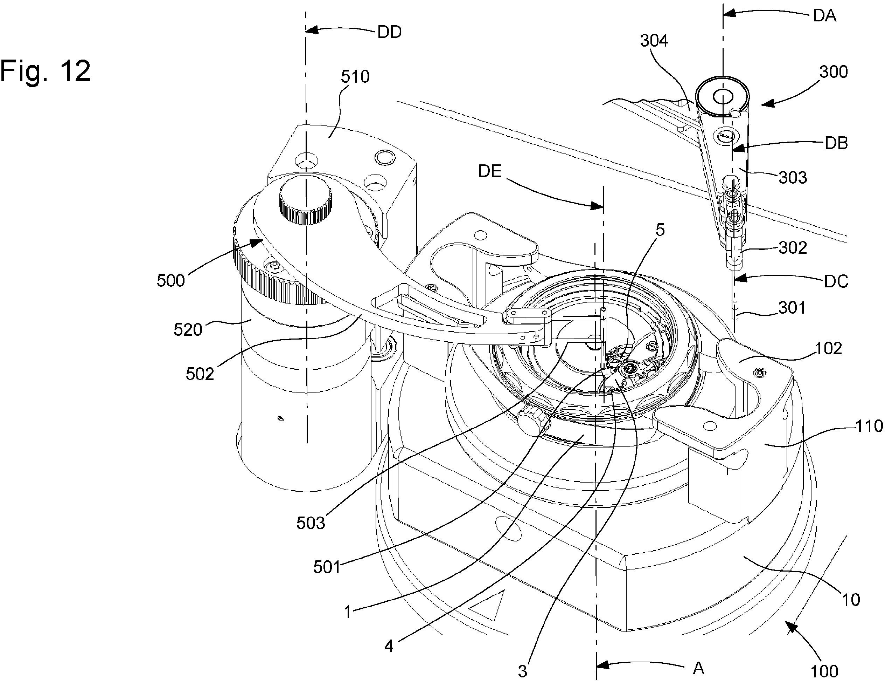

- la figure 12 est une vue similaire à la figure 11, où seul le doigt d'appui coopère en appui avec le balancier, tandis que l'entraîneur est en position dégagée par rapport à la tête de montre ;

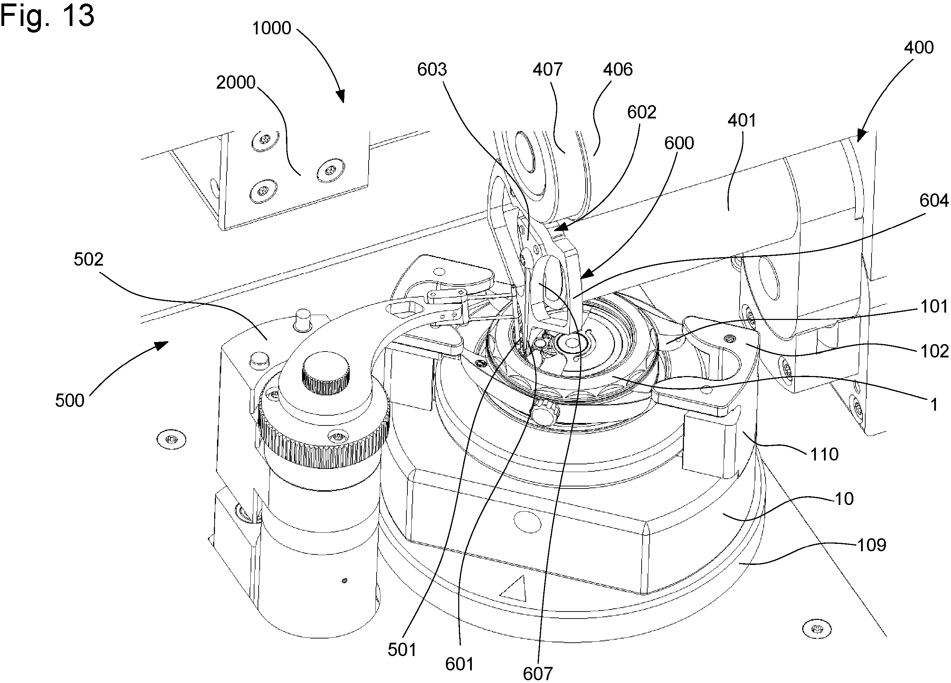

- la figure 13 est une vue similaire à la figure 11, où le doigt d'appui coopère en appui avec le balancier, tandis que la pince est en position de réglage d'une vis réglante ;

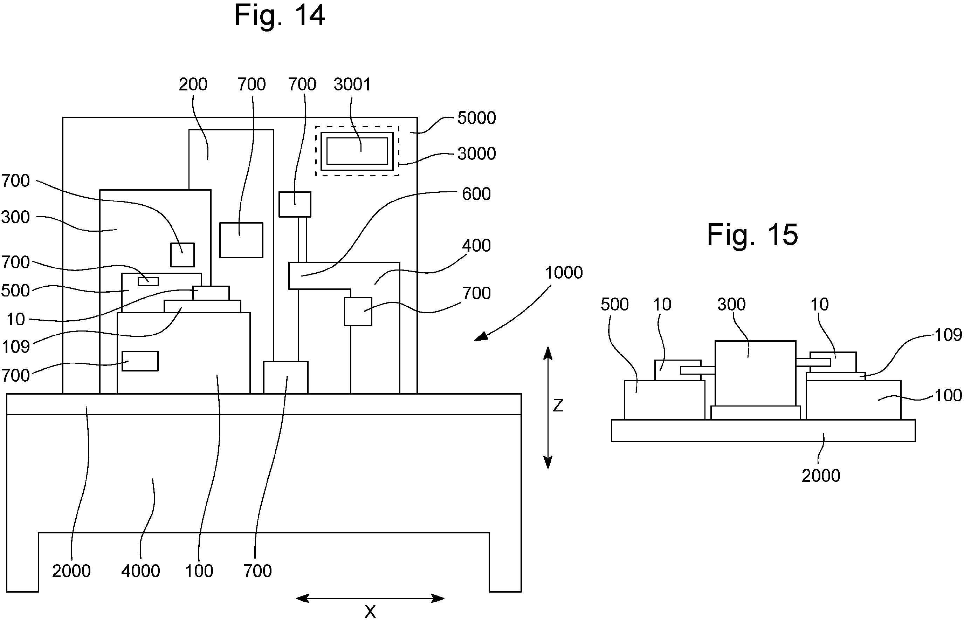

- la figure 14 est un schéma de principe, en élévation, d'une variante de la machine réglante de la figure 1, cartérisée et montée sur un établi d'horloger, et comportant une pluralité de modules optiques ;
- la figure 15 est un schéma de principe, en élévation, d'un détail d'une variante de la machine réglante de la figure 1 ou 14, comportant un palettiseur permettant l'échange d'un réceptacle entre la table du module de positionnement d'une part, et d'un analyseur de fréquence, ou d'un dispositif de contrôle de la marche non représenté, d'autre part ;

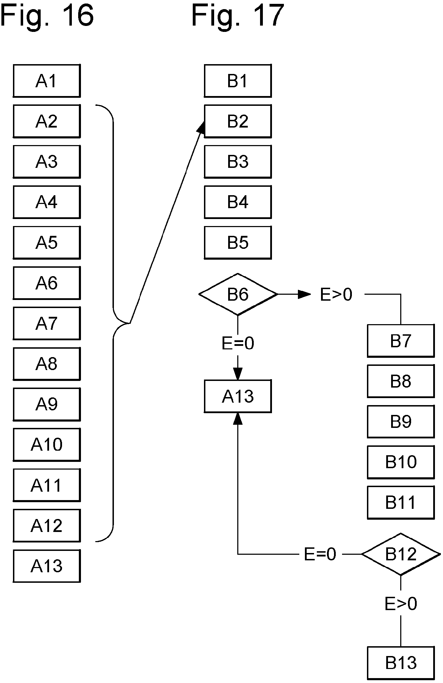

- la figure 16 est un logigramme des étapes de réglage des vis réglantes d'un balancier que comporte un oscillateur balancier-spiral, sur la machine réglante, dans une première variante en boucle ouverte ;
- la figure 17 est un logigramme des étapes de réglage des vis réglantes d'un balancier que comporte un oscillateur balancier-spiral, sur une machine réglante comportant un analyseur de fréquence et/ou un dispositif de contrôle de la marche, dans une variante en boucle fermée.

### Description détaillée des modes de réalisation préférés

L'invention concerne une pince 600 pour une machine réglante 1000 d'horlogerie, qui est conçue pour effectuer au moins un réglage et/ou ajustement sur au moins un ensemble horloger 1 fixé sur un réceptacle 10.

Cette machine réglante 1000 comporte des moyens de pilotage 3000, pour coordonner de façon automatisée les mouvements et/ou le fonctionnement d'au moins un module, en particulier d'au moins un module de positionnement 100.

L'invention sera décrite plus particulièrement pour l'utilisation de cette pince et de cette machine réglante 1000 pour procéder au réglage d'un oscillateur mécanique de montre, de type balancier-spiral, par action sur des vis réglantes que comporte classiquement le balancier de cet oscillateur. Ces vis réglantes sont généralement à pas différentiel, pour rattrapage du jeu ; ainsi elles restent en position une fois réglées. Cette application n'est nullement limitative.

Les figures illustrent une variante particulière, non limitative, où les axes sont définis classiquement par un système orthogonal : l'axe Z est la verticale du lieu, l'axe X correspond à une direction longitudinale, l'axe Y correspond à une direction transversale, tel que visible sur la figure 1 qui représente une machine réglante 1000, équipée de tous les modules de base et de tous les modules réglants qui vont être décrits ci-après.

Ce module de positionnement 100 comporte des moyens de manœuvre, qui sont agencés pour mouvoir dans l'espace un réceptacle 10, sur commande des moyens de pilotage 3000, pour l'amener sous un au moins un module de la machine réglante 100, notamment un module de réglage et/ou ajustement 400, dans une position de réglage et/ou d'ajustement par rapport à un bâti 2000 que comporte la machine réglante 1000, et pour l'amener sous au moins un module d'acquisition 200. Ce bâti 2000 peut être une embase propre à la machine réglante 1000 qui est alors facilement déplaçable, ou être constitué par un établi d'horloger 4000, qui est alors intégré à la machine réglante 1000.

Le bâti 2000 porte directement ou indirectement au moins un module réglant, et les moyens de pilotage 3000 sont agencés pour coordonner de façon automatisée les mouvements et/ou le fonctionnement de chaque module réglant, que comporte la machine réglante 1000.

La machine réglante 1000 comporte de préférence un carter 5000, englobant la totalité des modules qui la composent, et qui peut être mis en dépression ou en surpression pour garantir la propreté des équipements. Ce carter 5000 porte notamment les moyens de pilotage 3000, qui comportent classiquement une interface utilisateur 3001 tel qu'écran/clavier ou similaire, et une liaison avec un système de gestion de production et/ou un système de gestion de qualité. Plus particulièrement l'interface utilisateur 3001 est utilisable pour la visualisation à fort grossissement de la zone de travail pendant l'intervention des différents modules, quand la machine réglante 1000 comporte un module optique 700 équipé d'un microscope numérique ou similaire, ce qui facilite les réglages et validations.

L'étude montre que les étapes de travail et les déplacements dans une version manuelle assistée nécessitent au moins 29 étapes fonctionnelles, 37 déplacements, et 9 axes. Le choix d'une machine entièrement numérique permet d'assurer une conduite parfaite du processus, avec des opérations reproductibles, et des réglages facilement paramétrables ; de surcroît une version numérique permet seule de réduire le temps de cycle ; dans la variante particulière non limitative illustrée par les figures, ces moyens de pilotage 3000 pilotent 13 axes numériques, ce qui permet de réduire le nombre d'étapes fonctionnelles et de déplacements.

Naturellement le nombre et la disposition des axes dépendent de la configuration choisie pour la machine, qui comporte ici une colonne en porte-à-faux mobile en Z ; mais la mobilité en Z pourrait également être au niveau du module de positionnement 100. Les mouvements verticaux peuvent aussi être liés à un portique en lieu et place d'une colonne. L'avantage de la colonne en porte-à-faux est de dégager assez largement l'espace devant la colonne, pour les différentes entraîneurs et préhenseurs, et pour faciliter la vision ou le passage de faisceaux laser.

Plus particulièrement, le module de positionnement 100 est mobile par rapport au bâti 2000 au moins selon la direction longitudinale X. Le déplacement d'une table 109 portant un réceptacle 10 selon la direction longitudinale X se fait en au moins trois positions remarquables : position de repos, position de mesure laser, position de retouche de vis réglante. Ce module de positionnement 100 comporte avantageusement un axe rotatif Θ0 pour la rotation de la table 109. Dans une variante telle qu'illustrée, ce module de positionnement 100est mobile par rapport au bâti 2000 à la fois selon la direction longitudinale X et selon la direction transversale Y, ce qui permet d'aller au-delà de la course excentrique permise par l'axe rotatif Θ0.

Le module d'acquisition 200 comporte des moyens de mesure et/ou de contrôle, qui sont agencés pour l'identification et la détermination de la position dans l'espace d'un réceptacle 10, et/ou d'un au moins un ensemble horloger 1 fixé sur un réceptacle 10, par rapport au bâti 2000, et pour communiquer aux moyens de pilotage 3000 les informations pour la commande ou/et la correction de position du module de positionnement 100.

Le module d'acquisition 200 comporte notamment un chariot 209 mobile selon la direction verticale Z. Ce chariot 209 porte des moyens de vision et un faisceau laser orienté ici selon la direction verticale Z. Ce module est conçu pour l'ajustement automatique des positions focales vision et laser, par rapport aux différents ensembles 1, mouvements ou têtes de montre, portés par un réceptacle 10. Cet ajustement focal du système de vision et du système de mesure laser se fait selon un cycle de réglage qui comporte : position de centrage balancier, position zones dégagées, position mesure en Z au laser, position orientation des vis réglantes.

Ce module d'acquisition 200 peut encore, porter un chariot secondaire, également mobile selon la direction verticale Z et porté par le chariot 209, pour dissocier, pour certaines applications particulières, les mouvements du système de vision et du système laser. Dans une variante particulière non illustrée, ce module d'acquisition 200 peut comporter une autre source laser, non dévolue à la mesure, mais à des opérations d'ablation sur le balancier ou sur le spiral.

Dans l'application de la machine réglante 1000 au réglage d'un oscillateur à balancier-spiral, le module d'acquisition 200 sert essentiellement à détecter le centre du balancier pour garantir la fiabilité du process de retouche des vis réglantes, pour garantir le bon centrage d'une pince de réglage 600, exposée ci-après, sur l'axe des vis réglantes du balancier.

La machine réglante 1000 comporte au moins un module réglant qui est un mécanisme de réglage et/ou ajustement. Ce mécanisme de réglage et/ou ajustement comporte un module de réglage et/ou ajustement 400, lequel comporte des moyens de réglage et/ou d'ajustement, qui sont agencés pour effectuer un réglage et/ou un ajustement sur au moins un ensemble 1 porté par un réceptacle 10, et/ou sur au moins un composant ou un mobile que comporte un ensemble 1, sur commande des moyens de pilotage 3000.

Plus particulièrement, ce module de réglage et/ou ajustement 400 est un module de retouche angulaire, dont les moyens de réglage et/ou d'ajustement comportent une pluralité d'axes motorisés qui sont agencés pour mouvoir, ouvrir et fermer, dans un plan de pince, de préférence mais non limitativement dans un plan vertical passant par la verticale du lieu, ce plan de pince étant perpendiculaire à une direction de rotation de pince DF, DG, une pince 600, qui est agencée pour entraîner ou déformer un mobile ou un composant que comporte un ensemble 1 porté par un réceptacle 10.

Plus particulièrement, cette pince 600 est agencée pour permettre le serrage/desserrage de tout type de profil de tête de vis: « Torx® », hexagonale, avec fente, sans tête, « Imbus », conique, avec portée, ou autre.

Plus particulièrement, le module de réglage et/ou ajustement 400 est mobile par rapport au bâti 2000 de la machine réglante 1000 au moins selon la direction verticale Z.

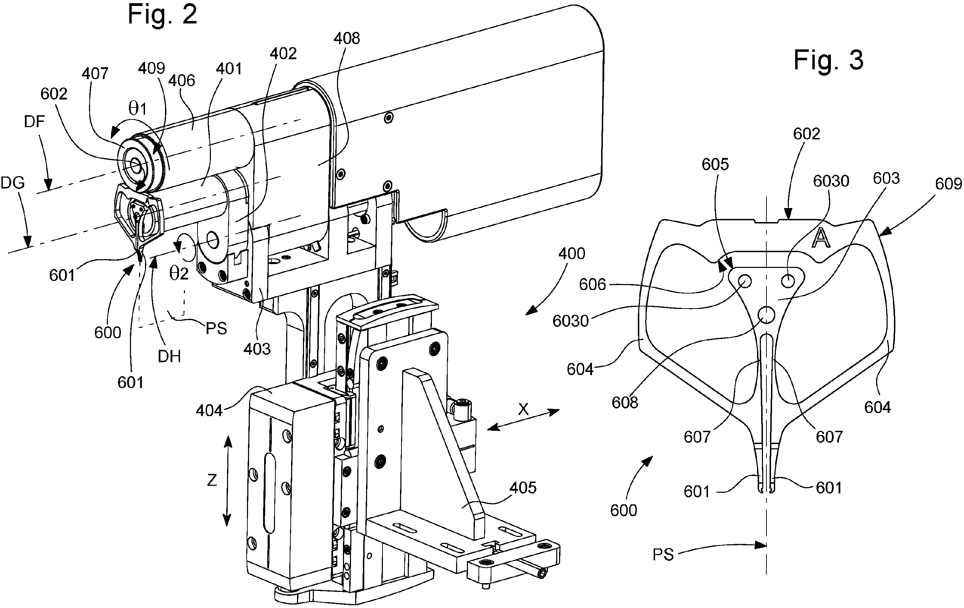

Plus particulièrement, dans l'agencement non limitatif illustré en particulier par la figure 2, le module de réglage et/ou ajustement 400 comporte un corps porte-pince 401, qui est agencé pour porter une pince 600, et qui est mobile en rotation autour d'un axe de rotation de pince DH, parallèle à la direction de rotation de pince DF, DG, selon un axe rotatif de manœuvre de pince Θ2, par rapport à un chariot de pince 403. Ce chariot de pince 403 est mobile selon une direction verticale Z parallèle à la verticale du lieu par rapport à une structure 404 laquelle est, ou bien fixée au bâti 2000, ou bien mobile selon une direction horizontale X perpendiculaire à la verticale du lieu, ou encore selon une direction verticale Z parallèle à la verticale du lieu, par rapport à une embase de pince 405 fixée au bâti 2000.

De façon particulière et avantageuse, la pince 600 est monolithique, dans un matériau élastique. Plus particulièrement, la pince 600 est en silicium et/ou oxyde de silicium, acier à ressort, ou similaire. En effet, dans ses applications préférées, la pince 600 est de très petites dimensions, son volume est similaire à celui d'un mouvement, et cette contrainte est difficilement compatible avec un mécanisme articulé pour un fonctionnement sans jeu, et avec une valeur répétitive d'efforts d'appui de faible intensité pour préserver les composants concernés.

Plus particulièrement, ce module de réglage et/ou ajustement 400 comporte un corps de commande de pince 406 comportant un galet 407, notamment un galet 407 formant came, qui est agencé pour exercer un effort sur une surface de la pince 600 et déformer la pince dans un mouvement d'ouverture ou de fermeture. Ce corps de commande de pince 406 est notamment mobile en rotation, selon un axe rotatif de commande d'ouverture/fermeture de pince Θ1, soit autour d'un axe de rotation de pince DH, soit autour d'un axe de galet DF parallèle à un axe de rotation de pince DH, par rapport à un chariot de pince 403 lequel est mobile selon une direction verticale Z parallèle à la verticale du lieu par rapport à une structure 404 laquelle est, ou bien fixée au bâti 2000, ou bien mobile selon une direction horizontale X perpendiculaire à la verticale du lieu par rapport à une embase de pince 405 fixée au bâti 2000.

Plus particulièrement, le corps de commande de pince 406 est agencé pour mouvoir le galet 407 sur 360° pour la commande d'ouverture ou de fermeture de la pince 600.

Plus particulièrement, le corps de commande de pince 406 est mobile en rotation autour de l'axe de rotation de pince DH, de façon à pouvoir, dans certaines positions angulaires, exercer un appui décalé par rapport à un plan de symétrie PS que comporte la pince 600.

La pince 600 comporte des bras de pince 601 pour la manœuvre d'un composant ou mobile de l'ensemble 1, notamment une vis réglante de balancier. Dans le mode d'utilisation non limitatif illustré par les figures, chaque bras de pince 601 est mobile dans un plan de pince, notamment un plan vertical passant par la verticale du lieu, le plan de pince étant perpendiculaire à un axe de rotation de pince DH ou à un axe de galet DF parallèle à un axe de rotation de pince DH. Bien sûr, pour d'autres applications on peut mouvoir dans l'espace le plan commun aux bras de pince 601.

Les bras de pince 601 sont conçus pour serrer le diamètre extérieur des vis réglantes de tous les types de balanciers, même les plus petites.

Plus particulièrement, la pince 600 est élastique, et comporte au moins une portion d'appui 602 qui est soumise à l'action d'un actionneur ou d'un galet 407 ou d'un excentrique et/ou d'un poussoir, que comporte le module de réglage et/ou ajustement 400, et dont toute déformation de cette au moins une portion d'appui 602 modifie la position relative des bras 601 entre eux, et déforme la pince 600, ce qui permet d'utiliser la pince 600 comme un outil pour procéder à un réglage.

Plus particulièrement, la pince 600 est symétrique par rapport à un plan de symétrie PS, et comporte des premiers bras élastiques 607 et/ou des deuxièmes bras élastiques 604.

Plus particulièrement, la pince 600 comporte une zone de fixation 603 qui est plus rigide que les premiers bras élastiques 607 et les deuxièmes bras élastiques 604, pour la fixation de la pince 600 à un corps porte-pince 401 que comporte le module de réglage et/ou ajustement 400 ; cette fixation peut être réalisée par la combinaison d'au moins une goupille de positionnement chassée dans un trou de goupille 6030 visible sur la figure 3, et d'au moins une vis ou similaire fixée au niveau d'une implantation 608.

Et, plus particulièrement, la pince 600 comporte au moins une telle portion d'appui 602, qui est plus rigide que les premiers bras élastiques 607 et les deuxièmes bras élastiques 604.

Avantageusement, les premiers bras élastiques 607 sont sensiblement alignés avec les bras de pince 601.

Le système peut fonctionner sans butée sur des surfaces complémentaires. Le cas échéant, le design du galet 407, notamment une came, permet une rotation de 360° sans risque pour la pince 600.

Dans une variante particulière, la zone de fixation 603 comporte des surfaces de limitation 605, qui sont agencées pour coopérer en appui de butée avec des surfaces complémentaires de limitation 606 que comporte la portion d'appui 602, de façon à limiter la déformation de la pince 600.

Dans une exécution particulière correspondant aux figures 1 à 3, la pince 600 est maintenue en référence par deux goupilles et une vis de serrage. La forme de la pince 600 est optimisée pour ne pas dépasser la contrainte limite élastique du matériau ainsi que la valeur maximale de la force exercée par le galet 407, notamment une came. Dans l'application particulière de l'ajustement d'un organe réglant, notamment l'action sur une vis de réglage de balancier, le profil (épaisseur, position angulaire) des bras 601 et 604 est défini pour être compatible avec la place à disposition pour venir serrer la vis réglante dans le balancier, pour permettre un pivotement angulaire de la pince 600 pour effectuer son process de réglage, sans venir toucher la boîte de montre, et, dans une exécution particulière et non limitative, permettre de disposer d'un effort de serrage allant jusqu'à 40 N par bras en bout de course de came (0.6mm environ).

En somme, l'axe vertical Z permet de gérer la descente en position de la pince 600 au niveau d'une vis réglante, la commande de l'axe rotatif de commande d'ouverture/fermeture de pince Θ1 déclenche l'ouverture de la pince 600 pour enserrer une vis réglante, puis la fermeture de la pince 600 autour de cette vis réglante. La manœuvre de l'axe rotatif de manœuvre de pince Θ2 commande le vissage ou le dévisage de la vis réglante, comme le ferait l'horloger.

Pour d'autres applications que les vis réglantes, la pince 600 peut être utilisée aussi bien comme un outil de manœuvre en rotation que comme un outil à mouvement linéaire tel qu'une bouterolle, une cheville, un chasse-goupille, un burin, un mandrin, ou autre. La pince 600 peut alors être utilisée comme un outil de déformation ou de gravage.

Plus particulièrement, la machine réglante 1000 comporte encore au moins un autre module réglant qui est un module d'entraînement 300. Ce module d'entraînement 300 comporte des moyens d'entraînement 301, qui sont agencés pour entraîner, au moins en rotation, au moins un composant ou un mobile, que comporte un tel ensemble horloger 1 porté par un réceptacle 10, sur commande des moyens de pilotage 3000.

Plus particulièrement, ce module d'entraînement 300 est un module d'entraînement de balancier, illustré par la figure 4. Ce module d'entraînement 300 comporte un corps 310 mobile au moins selon une direction verticale Z parallèle à la verticale du lieu, et par rapport auquel est mobile de façon articulée un entraîneur 301 motorisé, qui est rotatif autour d'un axe d'entraîneur DC parallèle à la direction verticale Z, ou sensiblement parallèle à la direction verticale Z.

Plus particulièrement, dans l'agencement non limitatif illustré par la figure 4, ce corps 310 comporte des moyens de positionnement 340, qui sont agencés pour positionner en rotation, autour d'un axe DN parallèle à la direction verticale Z, au moins un bras de renvoi 303, 304, par rapport auquel est monté pivotant, autour d'un axe intermédiaire DB parallèle à l'axe d'entraîneur DC, un bras d'entraîneur 302 portant l'entraîneur 301.

Et ce corps 310 porte des moyens d'entraînement 330 pour l'entraînement en rotation de l'entraîneur 301, par l'intermédiaire de moyens de transmission 320 à courroie, ou chaîne, ou engrenage, ou cardan, ou similaire.

Plus particulièrement, les moyens de positionnement 340 sont agencés pour positionner angulairement au moins un bras de renvoi 304, auquel est articulé un bras de renvoi, qui est le bras d'entraîneur 302, ou un avant-bras 303 auquel est articulé le bras d'entraîneur 302.

La figure 4 illustre ainsi, d'une part un premier moteur 310 qui fait tourner des courroies 320 qui entraînent en rotation l'arbre entraîneur 301, et d'autre part un deuxième moteur 340, qui fait tourner autour de son axe DN l'ensemble complet 310, 304-303-302, 301-320-330.

Le bras peut être escamoté à l'aide du corps autour de son axe moteur. Ce bras est réglable manuellement autour des 2 axes DA et DB. Le réglage est défini en fonction du calibre à régler.

Plus particulièrement, le corps 340 est porté par une table à mouvements croisés XZ dans un plan vertical passant par la verticale du lieu, comportant un chariot 350 qui est porté par un chariot 360 mobile par rapport à une embase de table 370 fixée au bâti 2000.

Le module d'entraînement 300 comporte avantageusement un axe rotatif Θ40 pour la rotation des moyens de transmission 320, et l'entraîneur 301 est mobile en rotation selon un axe rotatif Θ4.

Cet agencement permet un positionnement optimal du doigt entraîneur de rotation 301 par rapport au balancier.

Plus particulièrement, la machine réglante 1000 comporte encore au moins un autre module réglant qui est un module de maintien et/ou d'appui 500, notamment un module doigt d'appui, et qui comporte des moyens de maintien et/ou d'appui 501.

Ces moyens de maintien et/ou d'appui 501 sont agencés pour exercer un appui sensiblement axial sur un mobile ou un composant d'un ensemble 1 pendant ou après un réglage et/ou un ajustement effectué sur un ensemble 1 par le module de réglage et/ou ajustement 400, ou bien pour maintenir sans contact le mobile ou composant par l'action d'un champ magnétique ou électrostatique, selon une direction DE qui, dans une application particulière est parallèle à la verticale du lieu, ou qui fait un angle inférieur à 10° avec la direction verticale du lieu.

Plus particulièrement, dans la variante illustrée par la figure 1 et qui est particulièrement compacte, cet au moins un module de maintien et/ou d'appui 500, notamment un module doigt d'appui, est porté par le au moins un module de positionnement 100. Il peut toutefois en être indépendant, et fixé directement sur le bâti 2000 de la machine réglante 1000, ou sur un chariot mobile que comporte cette machine réglante 1000.

Plus particulièrement, dans l'agencement non limitatif illustré par la figure 5, cet au moins un module de maintien et/ou d'appui 500 comporte un corps 520, qui est rotatif selon un axe rotatif Θ3 pour la rotation par rapport à une direction verticale DD parallèle à la verticale du lieu et qui entraîne un bras porteur 502 qui porte, de façon fixe ou de façon articulée, les moyens de maintien et/ou d'appui 501.

La conception de cet appui utilise un principe similaire à la pince de réglage 600, c'est-à-dire l'utilisation de l'élasticité de la matière. Dans l'application de la machine réglante 1000 au réglage d'un oscillateur à balancier-spiral, il est impératif, afin d'éviter des contraintes sur les antichocs du balancier, d'exercer une force d'appui la plus faible et la plus maîtrisée possible.

Une première variante d'appui comporte un arbre avec guidage par palier bronze, qui appuie par son propre poids sur le balancier pour le bloquer en rotation, et nécessite un réglage parfait du jeu de guidage pour assurer que l'arbre tombe de son propre poids, tout en évitant tout blocage du balancier, ou encore une contrainte axiale néfaste sur le balancier.

Une variante, correspondant aux figures, applique un principe d'appui par guidage élastique qui répond à ces exigences. De préférence ce système d'appui est légèrement incliné pour ne pas générer une zone d'ombre sur le balancier, qui puisse perturber la détection de la vis réglante par des moyens optiques que comporte la machine réglante 1000, ce qui explique l'intérêt d'une direction DE légèrement inclinée.

Dans une variante, les moyens de maintien et/ou d'appui 501 comportent un doigt d'appui qui est une masse, maintenue guidée par des moyens de guidage élastique 503, fixés au bras porteur 502 et qui sont agencés pour maintenir la masse en appui sur un mobile ou composant par l'application d'un effort sensiblement vertical. Ces moyens de guidage élastique 503 peuvent notamment consister, tel que visible sur la figure 5, par deux lames flexibles sensiblement parallèles l'une à l'autre et légèrement inclinées par rapport à l'horizontale, et qui constituent un parallélogramme déformable avec le doigt d'appui 501 et la structure qui le porte.

Dans une autre variante non illustrée, les moyens de maintien et/ou d'appui 501 comportent un doigt d'appui qui est une masse guidée dans un logement du bras porteur 502 et qui est agencée pour maintenir par son propre poids un mobile ou composant.

De façon avantageuse lors de l'utilisation de moyens de mesure et/ou de contrôle du module d'acquisition 200 qui sont des moyens optiques, le module de maintien et/ou d'appui 500 est agencé pour orienter lesdits moyens de maintien et/ou d'appui 501 selon une direction DE légèrement inclinée par rapport à la verticale, afin de dégager le champ de vision de ces appareils.

Plus particulièrement, le corps 520 est mobile en rotation par rapport à un corps 510, lequel est mobile selon une direction verticale Z parallèle à la verticale du lieu, par rapport à une structure 590 qui est, ou bien fixée au bâti 2000, ou bien fixée à un chariot 530, 570, mobile par rapport à une embase 580 fixée au bâti 2000.

Dans une variante, ce corps 510 est mobile selon la direction verticale Z par rapport à un chariot porté par un chariot de base 570 à mouvement horizontal Y, ou X, ou à mouvements croisés XY dans un plan horizontal perpendiculaire à la verticale du lieu, par rapport à une embase 580 fixée au bâti 2000.

Dans une autre variante illustrée par la figure 5, le corps 510 est mobile rapport à une structure 590 qui est, ou bien fixée au bâti 2000, ou bien fixée à un chariot 530, 570 mobile par rapport à une embase 580 fixée au bâti 2000, sous l'action conjuguée d'un galet de roulement 560 porté par le corps 510 et d'une rampe 550 que comporte un chariot de rampe 540 mobile par rapport à un chariot de base 570 selon une direction horizontale X dans un plan horizontal perpendiculaire à la verticale du lieu.

En somme, le module de maintien et/ou d'appui 500 est agencé pour maintenir en position sensiblement axiale, selon la direction verticale Z ou selon une telle direction DE, un mobile ou composant d'un ensemble 1 pendant ou après l'entraînement du mobile ou composant par les moyens d'entraînement de cet au moins un module d'entraînement 300. Ce maintien en position axiale est approprié à la fin de l'entraînement de ce mobile ou de ce composant.

Le module de maintien et/ou d'appui 500 fournit une alternative sûre à des mécanismes de type stop-secondes traditionnels, dont les lames risquent d'endommager le balancier. L'axe Z permet la descente du doigt d'appui 501, et l'axe Θ3 permet la rotation du bras 502.

Plus particulièrement, le module d'acquisition 200 comporte des moyens de vision agencés pour scruter la zone de travail. En particulier, dans l'application de la machine réglante 1000 au réglage d'un oscillateur à balancier-spiral, les moyens de vision sont agencés pour détecter toute la surface du balancier, ou toute zone nécessaire pour le réglage des vis réglantes. Ces moyens de vision permettent encore la détection du numéro ou du type d'une vis réglante, ou la lecture d'un gravage effectué sur la serge du balancier pour déterminer le nombre et le type des vis réglantes.

Plus particulièrement, le module d'acquisition 200 est mobile au moins selon une direction verticale Z parallèle à la verticale du lieu, et comporte des moyens de vision agencés pour déterminer la position d'une surface d'un mobile ou composant, et/ou pour déterminer la nature et la position d'au moins un organe de réglage que comporte un ensemble 1, tel que vis de réglage, masselotte, piton, raquette, ou similaire

Plus particulièrement, le module d'acquisition 200 est mobile au moins selon une direction verticale Z parallèle à la verticale du lieu, et comporte des moyens de vision et des moyens de mesure laser, et un dispositif d'ajustement automatique des positions focale vision et laser par rapport à un mobile ou composant d'un ensemble 1 porté par un réceptacle 10, pour la détermination exacte de la position de la surface supérieure du mobile ou composant selon la direction verticale.

Plus particulièrement, la machine réglante 1000 comporte au moins un module optique 700, qui est porté directement ou indirectement par le bâti 2000, ou par le module de positionnement 100, ou le module d'acquisition 200, ou l'un des modules réglants 300, 400, 500, que comporte la machine réglante 1000. Ce module optique 700 est interfacé avec les moyens de pilotage 3000, pour le contrôle optique d'un composant ou un mobile pendant son réglage ou pendant une oscillation à laquelle il est soumis.

Plus particulièrement, le module de positionnement 100, et/ou le module d'acquisition 200, comporte des moyens d'identification pour l'identification d'un réceptacle 10 qui comporte avantageusement un marquage ou un repérage ou un composant d'identification de réceptacle, et pour l'identification de chaque ensemble 1 que porte le réceptacle 10, lequel ensemble 1 comporte avantageusement un marquage ou un repérage ou un composant d'identification de produit.

Plus particulièrement, la machine réglante 1000 comporte au moins un tel module optique 700 porté directement ou indirectement par le bâti 2000, et interfacé avec les moyens de pilotage 3000, pour le contrôle optique d'un mobile ou composant pendant son réglage ou pendant une oscillation à laquelle il est soumis, et/ou pour constituer des moyens d'identification d'un réceptacle 10 et pour l'identification de chaque ensemble 1 que porte le réceptacle 10.

Plus particulièrement, chaque réceptacle 10 comporte, pour la réception d'un ensemble 1, une surface d'appui 190 sensiblement plane, qui, dans une position de service particulière, horizontale, s'étend de façon sensiblement plane selon un plan horizontal perpendiculaire à une direction verticale Z parallèle à la verticale du lieu.

Naturellement, la machine réglante 1000 peut comporter un manipulateur pour mouvoir un tel réceptacle 10 dans l'espace, ce qui permet alors, dans le cas où l'ensemble 1 comporte un oscillateur dont on veut tester les propriétés chronométriques, de présenter cet ensemble 1 dans les positions normalisées de contrôle chronométrique, en position statique dans les différents angles, ou encore lors d'un contrôle dynamique passant par les positions et orientations normalisées, notamment tel que décrit dans le document EP3486734 au nom de MONTRES BREGUET.

Le réceptacle 10 comporte des moyens de positionnement et d'orientation par rapport à la table 109 du module de positionnement 100.

Plus particulièrement, ce réceptacle 10 est un posage qui comporte, sous sa surface d'appui 190, un mécanisme à ressort 180 pour la réception d'un ensemble 1, et, au-dessus de la surface d'appui 190, des cales de blocage 102 d'un ensemble 1. Ce réceptacle 10 comporte encore, entre la surface d'appui et les cales de blocage 102, des moyens d'orientation angulaire 103 pour l'orientation angulaire en appui de butée d'un chant de l'ensemble 1 sur le posage.

Les figures 8 à 10 illustrent successivement la préparation du posage pour la réception d'une tête de montre, avec deux brides ou cales de blocage 102 qui sont des fourches agencées pour prendre appui sur des cornes 101 de la tête de montre, la dépose de la tête de montre 1 sur le mécanisme à ressort 180 et en appui sur la surface d'appui 190 et dans une position angulaire où les cornes 101 sont en dehors des bras des fourches des cales de blocage 102, puis enfin la rotation de la tête de montre 1 jusqu'à une position d'appui de butée angulaire d'une des cornes 101 sur une goupille 103 formant les moyens d'orientation angulaire, guidée dans un logement de goupille 105, position d'appui de butée dans laquelle le mécanisme à ressort 180 assure un bon maintien. Le maintien de la tête de montre selon la direction verticale Z est assuré par les cales de blocage 102, dont la surface inférieure 104 prend appui sur les cornes 101 de la tête de montre. L'appui de la tête de montre se fait ici sur la glace de montre, un centrage est effectué au niveau de la lunette ou de la boîte de montre. Le mécanisme à ressort 180 garantit une force d'appui maîtrisée. Plus particulièrement, le réceptacle 10 comporte des blocs interchangeables 110 porteurs des cales de blocage 102 et des logements de goupilles 105, et qui sont, chacun, adapté à un type particulier de mouvement ou de tête de montre.

On comprend qu'un tel réceptacle peut alors être géré comme une palette d'un centre d'usinage, et être déplacé entre une station d'entrée, un magasin éventuel, et une station de sortie, en passant par une position de réglage et/ou d'ajustement sur la machine réglante 1000. A cet effet, le réceptacle 10 peut, dans une variante non illustrée par les figures, comporter, notamment sur sa face inférieure, des moyens de préhension analogues à ceux que comportent des palettes de centres d'usinage : cône Mors ou ISO ou SA, rainure à té, queue d'aronde, ou similaire, et des moyens de positionnement également similaires : alésages, goupilles, rainures, ou autres.

Plus particulièrement, la machine réglante 1000 comporte un mécanisme de palettisation, pour l'échange automatique de réceptacles 10 au niveau du module de positionnement 100.

Dans une variante, une palettisation simple, par exemple un palettiseur 900, transfère le réceptacle 10 vers un analyseur de fréquence 800, sans modification de la position du module de positionnement, et un retour éventuel du réceptacle 10 pour affinage de la correction du balancier, est effectué après redépose du réceptacle 10 sur la table du poste dont la position n'a pas changé.

Dans une autre variante, la machine réglante 1000 est directement équipée d'un dispositif de lancement de l'oscillation, et comporte des moyens optiques 700 avec une caméra et une horloge, pour un contrôle optique de la fréquence.

Avantageusement la machine réglante 1000 est équipée d'un dispositif de contrôle de la marche après réglage. Un tel palettiseur 900 est aussi utilisable pour transporter le réceptacle 10 sur un tel dispositif.

Plus particulièrement, et quand l'ensemble 1 comporte un oscillateur, la machine réglante 1000 comporte un analyseur de fréquence 800 et/ou un appareil de contrôle de chronométrie couplé aux moyens de pilotage 3000, lesquels sont programmés pour déclencher une itération de réglage sur un organe réglant jusqu'à l'entrée dans une tolérance requise de fréquence et/ou de marche.

L'utilisation de la machine réglante 1000 pour le réglage de vis réglantes de balancier est simple, il suffit de dégager au préalable la masse oscillante éventuelle de la zone de travail. Le réceptacle 10 est positionné sous les moyens de vision du module d'acquisition 200, qui définit la position de l'axe du balancier en XY, et qui commande un déplacement angulaire XY du réceptacle 10 si nécessaire, ou, dans une variante, un déplacement angulaire de ce réceptacle, ou encore un déplacement plus complexe combinant rotation(s) et translation(s). La recherche de la vis réglante se fait par entraînement par friction de la serge du balancier par l'entraîneur 301. Une descente en Z suit. Une fois la vis réglante en position de réglage dans le plan, on mesure sa position verticale : la mesure de position en Z d'une vis réglante au laser peut se faire sur une portée ou sur un plat d'une vis réglante, dont les paramètres géométriques sont connus et gérés par les moyens de pilotage 3000. Il s'agit en effet de positionner précisément les bras 601 de la pince 600 en symétrie par rapport à l'axe de la vis réglante, pour ne pas créer d'autre couple sur la vis que le couple de vissage ou de dévissage. On bloque alors le balancier en position avec le doigt d'appui 501, pour maintenir la position du balancier et car la fermeture de la pince génère une légère contrainte sur le balancier qui peut se traduire par un mouvement en Z de l'ordre de 30 micromètres au maximum ; on dégage alors l'entraîneur 301. On effectue ensuite le réglage par vissage ou dévissage de la vis réglante.

La pince selon l'invention permet de mettre en oeuvre un procédé d'utilisation d'une telle machine réglante 1000. Ce procédé comporte des mouvements relatifs entre les différents modules de la machine réglante 1000, il est ici décrit pour la machine réglante illustrée par les figures, l'homme du métier saura l'extrapoler à des architectures voisines, selon la mobilité ou non de chaque module, et l'agencement des axes de travail pour les différentes unités. Tous ces mouvements sont donc des mouvements relatifs.

Selon ce procédé :
- on équipe au moins un réceptacle 10 d'au moins un ensemble 1 qui est un mouvement d'horlogerie ou une montre de direction axiale A, et dont on veut régler et/ou ajuster au moins un mobile ou un composant de cet ensemble 1 ;
- on aligne sa direction axiale A avec la verticale du lieu,
- on dégage en fin de course le module d'acquisition 200, le module de réglage et/ou ajustement 400, et chaque module réglant 300, 500, que comporte la machine réglante 1000, de façon à dégager une zone de travail pour la mesure, le réglage et/ou l'ajustement ;
- on charge un réceptacle 10 sur le module de positionnement 100;
- on fait coïncider la position du réceptacle 10 avec celle de la zone de travail, et pour ce faire, selon la configuration de la machine réglante 1000, soit on amène le réceptacle 10 dans la zone de travail, soit on amène tout ou partie des modules constituant cette machine réglante 1000 au-dessus du réceptacle 10 ;
- on amène le module de positionnement 100 sous le module d'acquisition 200;
- on détermine une valeur cible de réglage d'au moins un paramètre ;
- on transmet aux moyens de pilotage 3000 la valeur du au moins paramètre mesurée sur cet au moins un ensemble 1 ;
- on choisit un cycle de programmation du module d'acquisition 200 pour mesurer au moins la position de la surface supérieure du mobile ou composant selon la direction verticale du lieu ;
- on transmet la position et toute mesure effectuée selon le cycle de programmation aux moyens de pilotage 3000 lesquels génèrent, selon le cycle de programmation choisi, des mouvements de positionnement du module de positionnement 100 pour mettre l'ensemble 1 dans une position imposée, et/ou des ordres de mouvement et de fonctionnement à chaque module réglant 300, 400, 500, que comporte la machine réglante 1000, selon une séquence programmée au niveau de la zone de travail.

Plus particulièrement, on équipe la machine réglante 1000 d'au moins un module de maintien et/ou d'appui 500, qui est agencé pour exercer un appui sur un mobile ou composant d'un ensemble 1 pendant ou après un réglage et/ou un ajustement effectué sur un ensemble 1 par un autre module réglant 300, 400, 500, ou bien pour maintenir sans contact le mobile ou composant par l'action d'un champ magnétique ou électrostatique, notamment selon une direction verticale DE parallèle à la verticale du lieu. Ce maintien en appui est approprié à la fin de l'entraînement de ce mobile ou de ce composant.

Plus particulièrement, on équipe la machine réglante 1000 d'au moins un module d'entraînement 300, qui comporte un entraîneur 301 motorisé rotatif autour d'un axe d'entraîneur DC parallèle à la direction verticale Z pour l'entraînement du mobile ou composant.

Plus particulièrement, on équipe la machine réglante 1000 d'au moins un module de réglage et/ou ajustement 400, qui comporte une pince 600 pour entraîner ou déformer le mobile ou composant, et on procède au réglage du paramètre par action de la pince 600 sur au moins un mobile ou composant de l'ensemble 1.

Plus particulièrement, on équipe la machine réglante 1000 d'au moins un module optique 700 pour le contrôle optique du mobile ou composant pendant son réglage ou pendant une oscillation à laquelle il est soumis.

Plus particulièrement, on équipe la machine réglante 1000 d'au moins un moyen de mesure du paramètre, interfacé avec les moyens de pilotage 3000, et on réitère le cycle de réglage du paramètre jusqu'à l'obtention d'une valeur du paramètre compatible avec la valeur cible.

Plus particulièrement, on équipe la machine réglante 1000 d'au moins un palettiseur 900 pour sortir le réceptacle 10 de la machine réglante 1000 dans une position de sortie que l'on mémorise, on utilise le palettiseur pour soumettre le réceptacle 10 au moyen de mesure du paramètre, puis pour ramener le réceptacle 10 dans la position de sortie pour reprendre le cycle de réglage et/ou d'ajustement de l'ensemble 1.

Plus particulièrement, on équipe la machine réglante 1000 d'au moins un moyen de mesure du paramètre, pour procéder à la mesure de la valeur du paramètre avant de reprendre le cycle de réglage et/ou d'ajustement de l'ensemble 1.

Dans l'application au réglage d'un oscillateur à balancier-spiral, la mise en œuvre la plus simple du procédé est en boucle ouverte : on réceptionne un ensemble 1 mesuré au préalable, on connaît la valeur des corrections à effectuer, on entre la valeur cible et la valeur réelle de la montre ou du mouvement ; on effectue ensuite la correction sur la machine des vis réglantes, et on restitue l'ensemble 1 sans contrôle.

Par exemple la séquence suivante décrit les opérations effectuées sur une tête de montre 1, comportant un balancier équipé de deux vis réglantes, dans une application où on agit uniquement sur le balancier et ses vis réglanbtes:
- Etape A1: Chargement de la tête de montre 1 dans le posage du réceptacle 10 ;
- Etape A2 (Station 01): Détection du centre axe balancier, correction de position pour avoir l'origine machine ;
- Etape A3 (Station 01): Rotation du balancier ;
- Etape A4 (Station 01): Détection de la première vis réglante par système caméra ;
- Etape A5 (Station 01): Blocage du balancier en position ;
- Etape A6 (Station 02): Déplacement sous capteur laser, mesure de la position en Z du balancier ;
- Etape A7 (Station 03): Serrage de la vis et réglage de la vis ;
- Etape A8 (Station 01): Retour en position détection vis réglante ;
- Etape A9 (Station 01): Rotation du balancier pour détection de la vis réglante par système caméra ;
- Etape A10 (Station 01): Blocage du balancier en position ;
- Etape A11 (Station 02): Déplacement sous capteur laser, mesure de la position en Z du balancier ;
- Etape A12 (Station 03): Serrage de la vis et réglage de la vis ;
- Etape A13: Déchargement de la tête de montre du posage.

Naturellement cette séquence est à adapter selon le nombre de vis réglantes.

Dans l'exemple ci-dessus la pince 600 agit uniquement sur les vis réglantes : on serre ou déserre la vis pour modifier l'inertie du balancier. L'ouverture/fermeture de la pince 600 utilise l'élasticité de la matière, car la pince 600 est de préférence une pièce monolithique. Un galet 407, notamment à profil de came, piloté par un moteur réalise l'ouverture/fermeture de la pince 600.

Le module d'acquisition 200 comporte un laser, qui détecte le plot dans lequel est placé la vis réglante. Le laser permet de définir la position en Z du balancier pour amener la pince 600 dans le même axe que la vis réglante, car l'objectif est de serrer/déserrer la vis dans l'axe pour ne pas exercer de couple parasite. La valeur cible (par exemple 2.5 s/jour) est gérée au niveau des moyens de pilotage 3000. La valeur actuelle de la marche est rentrée par software. Le système permet un temps de cycle complet réduit, de l'ordre de 50 à 70 secondes, selon le nombre de vis à régler.

Une utilisation en boucle fermée oblige à équiper la machine réglante d'un analyseur, ce qui la complexifie et nécessite davantage d'espace, mais permet d'effectuer sur le poste la vérification d'atteinte de la valeur cible.

Il est alors possible d'effectuer le cycle suivant:
- Phase B1: Entrée de la valeur cible et de la valeur réelle de la montre ;
- Phase B2: Correction sur la machine des vis réglantes selon les étapes A1 à A12 ;
- Phase B3: Libération du mouvement/tête de montre après correction des vis réglantes ;
- Phase B4: Contrôle de la marche sur mouvement ou sur tête de montre sur appareil analyseur ;
- Phase B5: Vérification de l'écart entre valeur cible et valeur réelle ;
- Phase B6:
   - si écart nul, validation de la correction effectuée, déchargement selon A13 ;
   - si écart positif, nécessité d'une correction supplémentaire, avec alors itération du processus :
- Phase B7 : Entrée de la valeur cible et de la valeur mesurée de la montre ;
- Phase B8: Correction sur la machine des vis réglantes ;
- Phase B9: Libération du mouvement/tête de montre après correction des vis réglantes ;
- Phase B10: Contrôle de la marche sur mouvement ou sur tête de montre sur analyseur ;
- Phase B11: Vérification de l'écart entre valeur cible et valeur réelle ;
- Phase B12:
   - si écart nul, validation de la correction effectuée et de l'ensemble 1, déchargement selon A13 ;
   - si écart positif, sortie de l'ensemble 1 sans le valider en poste de contrôle B13.

La machine réglante 1000 peut, encore, être équipée d'une caméra couplée à une horloge, pour un contrôle optique de la fréquence.

La machine réglante est utilisable pour de nombreuses applications horlogères.

Plus particulièrement, on utilise la machine réglante 1000 pour le réglage d'une vis réglante qui est une masselotte de balancier ou une vis de réglage de pont de balancier ou une vis de réglage de piton de spiral, ou une vis de réglage de partagement, ou une vis de réglage d'alignement, ou pour le réglage d'une raquette.

Plus particulièrement, on utilise la machine réglante 1000 pour effectuer un réglage de partagement par ajustement en Z et action sur une vis ou un pointeau, ou un réglage d'alignement, ou un réglage de position dans un oblong, ou autre.

Plus particulièrement, on utilise la machine réglante 1000 pour la déformation locale d'un pont ou d'un spiral ou d'un bras ou d'une serge de balancier.

En somme, l'invention apporte différents avantages :
- la mise en œuvre d'une pince active pour effectuer le serrage de la vis réglante est effectué avec une pince sans jeu, car il s'agit d'une pince monolithique, avec fonctionnement en zone élastique de la matière, ce qui garantit la précision de la valeur de réglage ; une pince telle qu'illustrée est capable d'un effort de serrage de 40 N, dans la pratique, 20 N suffisent pour manipuler en sécurité une vis réglante sans risque de la casser ;
- il n'y a pas de limitation de la valeur de correction, et il est possible d'effectuer plusieurs cycles de vissage ou de dévissage de la vis réglante sans perte de précision ;
- le système numérique de pilotage du process de réglage de la vis réglante garantit la précision de la valeur de réglage, avec un cycle spécifique de rattrapage du jeu, et une flexibilité du réglage, puisqu'il est possible de choisir la ou les vis réglantes à corriger ;
- le réglage est effectué en une fois, et permet d'atteindre des valeurs de l'ordre de 1/- 1 seconde par jour quel que soit le calibre ;
- la détection de la position des vis réglantes est automatique, et permet le réglage en une fois des deux ou quatre vis réglantes dans les cas usuels ;
- aucune contrainte n'est exercée sur le mouvement, grâce aux axes numériques et au process automatique de détection du centre du balancier, de la position en Z du balancier, et de la position des réglantes ;
- aucun outil manuel n'est mis en œuvre, ce qui garantit l'absence d'altération ou de blessure d'un composant de la montre ;
- absence de contrainte sur le balancier lors du réglage grâce au doigt d'appui ;
- le process entièrement numérique évite tout besoin de comparaison à un balancier étalon ;
- la machine est compatible avec tous les calibres, même les plus petits, car la pince permet des manipulations impossibles à bien exécuter en toute sécurité avec des brucelles, une clé, ou un outil spécial de réglage.

Le poste de travail équipé avec une telle machine réglante très compacte est simple à utiliser, avec une excellente ergonomie. Les dimensions restreintes de la machine réglante 1000 facilitent en effet sa combinaison avec un établi horloger 4000 classique, dont la machine réglante 1000 n'occupe qu'environ la moitié de la longueur.

## Revendications

1. Pince (600) pour machine réglante (1000) d'horlogerie pour effectuer au moins un réglage et/ou ajustement sur un ensemble horloger (1) sous l'action d'un mécanisme de réglage et/ou ajustement, que comporte une dite machine réglante (1000), **caractérisée en ce que** ladite pince (600) comporte des bras de pince (601) agencés pour entraîner ou déformer un mobile ou un composant que comporte un dit ensemble (1), et **en ce que** ladite pince (600) est élastique et comporte au moins une portion d'appui (602) agencée pour être soumise à l'action d'un actionneur ou d'un galet (407) ou d'un excentrique et/ou d'un poussoir, que comporte un dit mécanisme de réglage et/ou ajustement, et dont toute déformation de ladite au moins une portion d'appui (602) modifie la position relative desdits bras (601) entre eux.

2. Pince (600) selon la revendication 1, **caractérisée en ce que** lesdits bras de pince (601) sont chacun mobile dans un plan de pince commun.

3. Pince (600) selon la revendication 1 ou 2, **caractérisée en ce que** ladite pince (600) est symétrique par rapport à un plan de symétrie (PS), et comporte des premiers bras élastiques (607) et/ou des deuxièmes bras élastiques (604), et comporte une zone de fixation (603) plus rigide que lesdits premiers bras élastiques (607) et deuxièmes bras élastiques (604) pour la fixation de ladite pince (600) à un corps porte-pince (401) que comporte un module de réglage et/ou ajustement (400), et **en ce que** ladite au moins une portion d'appui (602) est plus rigide que lesdits premiers bras élastiques (607) et lesdits deuxièmes bras élastiques (604).

4. Pince (600) selon la revendication 3, **caractérisée en ce que** ladite zone de fixation (603) comporte des surfaces de limitation (605) agencées pour coopérer en appui de butée avec des surfaces complémentaires de limitation (606) que comporte ladite portion d'appui (602), de façon à limiter la déformation de ladite pince (600).

5. Pince (600) selon l'une des revendications 1 à 4, **caractérisée en ce que** ladite pince (600) est monolithique, dans un matériau élastique.

6. Pince (600) selon la revendication 5, **caractérisée en ce que** ladite pince (600) est en silicium et/ou oxyde de silicium, ou en acier à ressort.

7. Pince (600) selon la revendication 6, **caractérisée en ce que** ladite pince (600) est agencée pour permettre le serrage/desserrage d'un profil de tête de vis de type « Torx® », ou hexagonale, ou avec fente, ou sans tête, ou « Imbus », ou conique, ou avec portée.

8. Mécanisme de réglage et/ou ajustement d'horlogerie, comportant un module de réglage et/ou ajustement (400) pour machine réglante (1000) d'horlogerie, et comportant au moins une pince (600) selon l'une des revendications 1 à 7, **caractérisé en ce que** ledit module de réglage et/ou ajustement (400) comporte des moyens de réglage et/ou d'ajustement qui comportent une pluralité d'axes motorisés qui sont agencés pour mouvoir, ouvrir et fermer, dans un plan perpendiculaire à une direction de rotation de pince (DF), une dite pince (600).

9. Mécanisme de réglage et/ou ajustement selon la revendication 8, **caractérisé en ce que** ledit module de réglage et/ou ajustement (400) comporte un corps porte-pince (401) agencé pour porter une dite pince (600) et qui est mobile en rotation autour d'un axe de rotation de pince (DH) selon un axe rotatif de pince Θ2, par rapport à un chariot de pince (403) lequel est mobile selon une direction verticale Z parallèle à la verticale du lieu par rapport à une structure (404) laquelle est, ou bien fixée audit bâti (2000), ou bien mobile selon une direction horizontale X et/ou verticale Z perpendiculaire à la verticale du lieu par rapport à une embase de pince (405) fixée audit bâti (2000).

10. Mécanisme de réglage et/ou ajustement selon la revendication 8 ou 9, **caractérisé en ce que** ledit module de réglage et/ou ajustement (400) comporte un corps de commande de pince (406) comportant un galet (407) qui est agencé pour exercer un effort sur une surface de ladite pince (600) et déformer ladite pince dans un mouvement d'ouverture ou de fermeture, lequel corps de commande de pince (406) est mobile en rotation, selon un axe rotatif de commande de pince Θ1, soit autour d'un axe de rotation de pince (DH), soit autour d'un axe de galet (DF) parallèle à un axe de rotation de pince (DH), par rapport à un chariot de pince (403) lequel est mobile selon une direction verticale Z parallèle à la verticale du lieu par rapport à une structure (404) laquelle est, ou bien fixée audit bâti (2000), ou bien mobile selon une direction horizontale X perpendiculaire à la verticale du lieu par rapport à une embase de pince (405) fixée audit bâti (2000).

11. Mécanisme de réglage et/ou ajustement selon la revendication 10, **caractérisée en ce que** ledit corps de commande de pince (406) est agencé pour mouvoir ledit galet (407) sur 360° pour la commande d'ouverture ou de fermeture de ladite pince (600).

12. Mécanisme de réglage et/ou ajustement selon la revendication 10, **caractérisé en ce que** ledit corps de commande de pince (406) est mobile en rotation autour dudit axe de rotation de pince, de façon à pouvoir exercer, dans certaines positions angulaires, exercer un appui décalé par rapport à un plan de symétrie PS que comporte ladite pince (600).

13. Mécanisme de réglage et/ou ajustement selon l'une des revendications 8 à 12, **caractérisé en ce que** lesdits bras de pince (601) sont chacun mobile dans un plan de pince commun, qui est perpendiculaire à un axe de rotation de pince (DH), ou à un axe de galet (DF) parallèle à un axe de rotation de pince (DH), et qui peut être orienté en tant que plan vertical passant par la verticale du lieu.
